# EUROPÄISCHE PATENTSCHRIFT

(11) **EP 2 749 920 B1**
(45) Veröffentlichungstag und Bekanntmachung des Hinweises auf die Patenterteilung: **07.08.2019**
(21) Anmeldenummer: 13405143.2
(22) Anmeldetag: 30.12.2013
(51) Int. Cl.: G02B 6/44

(54) **Anschlussdose für Lichtwellenleiter**
Junction box for fibre optic cable
Boîte de jonction pour guide optique

(30) Priorität: 31.12.2012 CH 30012012
(43) Veröffentlichungstag der Anmeldung: 02.07.2014
(73) Patentinhaber: odasys AG, 8105 Regensdorf (CH)
(72) Erfinder: Illi, Walter, 8107 Buchs ZH (CH)
(74) Vertreter: Frei Patent Attorneys

(56) Entgegenhaltungen:
- EP-A1- 2 068 185
- EP-A1- 2 068 186
- WO-A1-2010/089029
- WO-A1-2013/017827
- WO-A2-2011/107181
- CH-A1- 700 318
- DE-A1-102008 027 381
- US-A1- 2005 220 435
- US-A1- 2009 290 844

## Beschreibung

Die Erfindung bezieht sich auf das Gebiet der Kommunikations- und Datenkabelsysteme basierend auf Lichtwellenleiter, insbesondere Glasfasern. Die Erfindung betrifft eine Anschlussdose für Lichtwellenleiter gemäss dem Oberbegriff des Anspruchs 1.

Lichtwellenleiterkabel finden immer häufigeren Einsatz vor allem in der Telekommunikations-Technik, der Nachrichtenübermittlung per Telefon, Funk und Fernsehen und der Computertechnik.

Die Weiterführung der bekannten Lichtwellenleiter-Technologie zur Übertragung von Daten und Kommunikation via Lichtwellenleiter über Ortszentralen oder Verteiler bis in die einzelnen Haushalte bzw. Büros setzt entsprechende Anschlussdosen voraus, welche für Lichtwellenleiter geeignet sind. Solche Anschlussdosen enthalten entsprechende Steckanschlüsse zum Anschliessen eines Lichtwellenleiter-Kabels über eine Steckverbindung.

Das Verlegen von Lichtwellenleiterkabeln, insbesondere von Glasfaserkabeln, bis in die Wohnung des Teilnehmers bezeichnet man in der Telekommunikation auch als "FTTH". "FTTH" steht als Abkürzung für "Fiber To The Home".

Eine auf Lichtwellenleiterkabel, insbesondere auf Glasfaserkabel, basierende Netzwerkverkabelung innerhalb eines Gebäudes oder Campus bis zu den Netzwerkdosen in den einzelnen Arbeitsräumen, wie Büros, bezeichnet man in der Telekommunikation auch als "FTTD". "FTTD" steht als Abkürzung für "Fiber To The Desk".

Die hierzu notwendigen Anschlussdosen werden zum Beispiel als Wanddose an der Wand befestigt oder in Wandöffnungen eingebaut. Im ersten Fall spricht man von Aufputz- oder Überputzdosen und im zweiten Fall von Unterputz- oder Einbaudosen.

Es ist im Weiteren auch bekannt, Anschlussdosen als Bodendosen in Unterfluranwendungen einzusetzen. Hierzu werden die Anschlussdosen entweder direkt in eine Einbauöffnung im Boden eingelassen oder in eine im Boden eingelassenen Anschlusseinrichtung, bzw. in eine darin vorgesehenen Einbauöffnung montiert. Die Anschlusseinrichtung ist in der Regel auf einem Tragrahmen abgestützt. Die Anschlusseinrichtung lässt sich beispielsweise mittels einer Abdeckung abdecken, wobei Kabelauslässe, welche das Lichtwellenleiterkabel aus der Anschlusseinrichtung nach aussen führen, ausgebildet werden.

Bodendosen im Bereich der Lichtwellenleiter-Technologie sind jedoch nicht weit verbreitet und bekannte Lösungen für Unterfluranwendungen überzeugen bezüglich Handhabung und Montage nicht immer.

Lichtwellenleiter und Kupferkabel unterscheiden sich sehr stark in ihrer Handhabung. So erfolgt das Zusammenfügen von Lichtwellenleitern mittels anderen Verfahren als bei Kupferkabeln. Während nämlich die Herstellung eines elektrischen Kontaktes zwischen zwei Kupferkabeln mit einfachen Mitteln möglich ist, ist die Herstellung einer genügenden optischen Verbindung zwischen zwei dünnen Lichtwellenleiterfasern mittels Spleisstechnologie wesentlich aufwändiger und diffiziler.

Ferner müssen Lichtwellenleiterkabel bzw. deren Fasern im Vergleich zu Kupferleitungen mit Mindestbiegeradien verlegt werden. Bei Unterschreiten eines bestimmten Biegeradius des Kabels bzw. der Faser kommt es zur Zerstörung oder Beschädigung der Lichtwellenleiterfasern oder die Dämpfungswerte können nicht gering genug gehalten werden, was zu Störungen beim Betrieb der angeschlossenen Geräte führt.

Ferner ist es auch notwendig, dass eine Anschlussdose für Lichtwellenleiter eine gewisse Kabel- bzw. Faserreserve aufnehmen kann. Die Kabelreserve ist notwendig um genügend Flexibilität beim Anschliessen des Kabels bzw. der Lichtwellenleiterfasern in der Anschlussdose zu haben.

So wird beispielsweise eine Unterputz- bzw. eine Bodenanschlussdose erst nach Anschliessen der Kabel bzw. der Fasern in ihre Endposition in der Wand bzw. im Boden gebracht. Ferner dient die Kabelreserve dazu, um eventuelle Beschädigungen der Fasern beim Vorbereiten der Anschlussdose und insbesondere beim Spleissen korrigieren zu können. Die Kabelreserve kann z. B. bei 20 cm bis 1 m betragen.

Im Weiteren ist es auch notwendig, dass die Anschlussdose immer eine gewisse Faserreserve aufnehmen kann. Die Fasern gehen aus der Entmantelung der zugeführten Lichtwellenleiterkabel hervor. Die Faserreserve ist notwendig damit die einzelne Faser eines Lichtwellenleiterkabels überhaupt mit einem vorkonfektionierten Steckanschluss, einem so genannten "Pigtail", gespleisst werden kann. So muss nämlich die Spleissverbindung mittels eines Spleissgeräts ausserhalb der Anschlussdose in einem Arbeitsbereich mit genügend Platz ausgeführt werden.

Beim Einschieben der Anschlussdose in die Wand- oder Bodenöffnung im Anschluss an die Spleissung wurde bis anhin die überschüssige Kabellänge einfach in die Aufnahmeöffnung in der Wand bzw. im Boden zurückgestossen. Dabei wurde kaum auf die Einhaltung von Mindestradien geachtet.

Im Weiteren ist die offen liegende, d.h. entmantelte Lichtwellenleiterfaser im Vergleich zu einem Kupferdraht besonders empfindlich auf mechanische Einwirkung. Daher sollte die Faser in der Anschlussdose besonders gut geschützt untergebracht sein. Dies gilt insbesondere im Hinblick auf den Einbau der Anschlussdose in der Wand bzw. im Boden im Anschluss an die Spleissung der Lichtwellenleiterfasern und der Befestigung des Kabels bzw. deren Fasern in der Anschlussdose.

Die Publikationsschrift EP 2 068 185 A1 beschreibt eine mehrteilige Anschlussdose für Lichtwellenleiter mit einem Einbaugehäuse, einer Montageplatte und einer befestigbaren Abdeckung.

Die Publikationsschrift EP 2 068 186 A1 beschreibt eine mehrteilige Aufnahmedose für ein optisches Telekommunikationskabel mit einer Abdeckung.

Die Publikationsschrift DE 10 2008 027 381 A1 beschreibt eine Anschlussbox für Glasfaserkabel. Die Anschlussbox umfasst ein mindestens zweiteiliges Gehäuse mit einem Unterteil und einem schwenkbar am Unterteil angeordneten Deckel.

Die Publikationsschrift WO 2010/089029 beschreibt ein zweiteiliges Netzabschlussgehäuse für einen optischen Netzwerkabschluss. Das Netzabschlussgehäuse umfasst mindestens zwei Kammereinrichtungen.

Aufgabe vorliegender Erfindung ist es daher, eine Anschlussdose für Lichtwellenleiterkabel vorzuschlagen, welchen den oben genannten Anforderungen Rechnung trägt. Ferner soll die Anschlussdose kompakt in ihrer Ausgestaltung ist und vergleichsweise einfach und kostengünstig herstellbar sein. Im Weiteren soll die Anschlussdose eine einfache und schnelle und dennoch geordnete und systematische Montage des Lichtwellenleiterkabels in der Anschlussdose erlauben.

Diese Aufgabe wird mit den Merkmalen des unabhängigen Patentanspruches 1 gelöst. Vorteilhafte Weiterbildungen und Ausführungsformen der Erfindung ergeben sich aus den abhängigen Ansprüchen, der Beschreibung und den Zeichnungen.

Die erfindungsgemässe Anschlussdose für den Lichtwellenleiter enthält einen Gehäusekörper, welcher einen Gehäuseinnenraum ausbildet.

Der Gehäuseinnenraum wird z.B. durch eine erste und zweite Seitenwand begrenzt, welche einander gegenüber liegen. Der Gehäuseinnenraum kann im Weiteren durch eine in einem Winkel an die Seitenwände angrenzende Frontwand begrenzt sein. Ferner kann der Gehäuseinnenraum zusätzlich auch durch eine, der Frontwand gegenüber liegende Rückwand begrenzt sein.

Der Gehäuseinnenraum ist über eine Trennwand in einen ersten Aufnahmeraum, auch Kabelreservekammer genannt, und in einen zweiten Aufnahmeraum, auch Spleisskammer genannt, unterteilt.

Die Trennwand ist z. B. zwischen den beiden Seitenwänden angeordnet. Die Trennwand schliesst z. B. in einem Winkel an die Seitenwände an. Die Trennwand ist z. B. mit den Seitenwänden verbunden, insbesondere integral verbunden.

Die Trennwand verläuft insbesondere parallel zur Einschubrichtung der Anschlussdose in eine Aufnahme im Boden bzw. in der Wand. Die Trennwand verläuft insbesondere senkrecht zu einer nachfolgend beschriebenen Frontwand.

Der Gehäusekörper mit Trennwand und den Aufnahmeräumen kann als Montageeinheit ausgebildet sein. Die Montageeinheit kann insbesondere vorgefertigt sein. Vorgefertigt bedeutet, dass der Lichtwellenleiter in die fertige Montageeinheit geführt und dort verlegt und mit dem Kupplungsteil verbunden wird, ohne dass bei diesem Vorgang weitere Gehäuseteile zusammenzufügen sind. Der Gehäusekörper kann z. B. einteilig ausgebildet sein.

Die beiden Aufnahmeräume dienen unter anderem zur Aufnahme einer Lichtwellenleiterkabel- und einer Lichtwellenleiterfaser-Reserve. Diese wird im Aufnahmeraum, wie nachfolgend näher beschrieben, insbesondere schlaufenartig aufgewunden.

Die Anschlussdose enthält ferner eine Einführöffnung zum Einführen eines Lichtwellenleiters in den ersten Aufnahmeraum. Die Einführöffnung ist insbesondere in einer Seitenwand oder der Rückwand eingelassen.

Ferner enthält die Anschlussdose eine Durchführungsöffnung bzw. Durchgangsöffnung, insbesondere eine Kabeldurchführungsöffnung, zwischen dem ersten und zweiten Aufnahmeraum zum Durchführen des Lichtwellenleiters, insbesondere des Lichtwellenleiterkabels vom ersten in den zweiten Aufnahmeraum.

Im Weiteren enthält die Anschlussdose wenigstens eine im zweiten Aufnahmeraum angeordnete Aufnahme für einen Kupplungseinsatz. Die Aufnahme beinhaltet eine Durchgangsöffnung in der Frontwand. Der Kupplungseinsatz kann z. B. über eine Formschlussverbindung in die Aufnahme einführbar sein.

Der Kupplungseinsatz kann zum Beispiel ein Kupplungsteil zur Ausbildung einer lösbaren Verbindung, insbesondere einer Steckverbindung sein. Der Kupplungseinsatz kann auch eine Halterung für den Kupplungsteil eines Lichtwellenleiterkabels, insbesondere eines vorkonfektionierten "Pigtails" sein. Die Lichtwellenleiter werden z. B. über lösbare Steckverbinder miteinander verbunden. Die Aufnahme kann auch zur Aufnahme eines Blinddeckels dienen.

Die Aufnahme ist in der Frontwand so angeordnet, dass zwischen dieser und dem durch die Trennwand ausgebildeten Aufnahmeboden ein Luftraum ausgebildet wird, in welchem die Windungen der Lichtwellenleiter-Reserve, insbesondere der Lichtwellenleiterfaser-Reserve, z. B. entlang der Frontwand durchgeführt werden können.

Unter Lichtwellenleiter soll in dieser Beschreibung sowohl ein Kabel mit einer oder mehreren Fasern oder eine einzelne Faser zur Leitung von Lichtwellen gemeint sein. Ein Kabel zeichnet sich insbesondere durch eine schützende Ummantelung aus.

Die Fasern eines Lichtwellenleiters sind insbesondere Glasfasern.

Die Anschlussdose enthält insbesondere eine Frontwand. Die Frontwand ist beispielsweise als Front-Panel ausgebildet. Die Frontwand ist insbesondere senkrecht zur Einschubrichtung der Anschlussdose ausgerichtet. Die Frontwand kann an der Aussenseite eine Aufnahme, z. B. in Form eines Fensters, zum Anbringen einer sichtbaren Beschriftung für die Anschlussdose enthalten.

Die Frontwand kann als separates Bauteil ausgebildet sein und z. B. über eine Formschlussverbindung mit dem Gehäusekörper lösbar oder nicht lösbar verbunden sein, z. B. auf diesen aufgesteckt sein. Die Formschlussverbindung kann eine Schnappverbindung sein. Die Aufnahme für den Kupplungseinsatz ist insbesondere in der Frontwand angeordnet.

Die Anschlussdose enthält ferner insbesondere eine erste und zweite Seitenwand, welche einander gegenüber liegen und in einem Winkel an die Frontwand anschliessen. Die Seitenwände sind über die Frontwand miteinander verbunden.

Die Frontwand überkragt insbesondere die beiden Seitenwände seitlich. Die Überkragung kann als Einschubbegrenzung dienen.

Die Anschlussdose enthält insbesondere auch eine der Frontwand gegenüber liegende Rückwand, welche in einem Winkel an die erste und zweite Seitenwand anschliesst. Die Seitenwände sind dabei auf der, der Frontwand gegenüber liegenden Seite über die Rückwand miteinander verbunden.

Gemäss der Erfindung ist die Trennwand in einem zentralen Bereich des Gehäuseinnenraums zum ersten Aufnahmeraum hin zurückversetzt. Dadurch wird im zweiten Aufnahmeraum eine von einer Umfassungs- bzw. Einfassungswand umfasste zentrale Vertiefung ausgebildet. Diese dient z. B. der Aufnahme einer Lichtwellenleiter-Reserve, insbesondere einer Lichtwellenleiterkabel-Reserve, z. B. in Form einer Teilwindung, einer einzelnen Windung oder von mehreren Windungen.

In der zentralen Vertiefung kann ferner eine Zugentlastungseinrichtung angeordnet sein. Die Zugentlastungseinrichtung ist insbesondere zur Halterung des Lichtwellenleiters, insbesondere des Lichtwellenleiterkabels, in der zentralen Vertiefung ausgelegt. Der Lichtwellenleiter wird in der Zugentlastungseinrichtung insbesondere klemmend gehaltert.

Ferner wird im ersten Aufnahmeraum durch die zurückversetzte Trennwand insbesondere ein von der Einfassungswand begrenzter Umwindekörper zur Aufnahme einer Lichtwellenleiter-Reserve, insbesondere einer Lichtwellenleiterkabel-Reserve, in Form von Windungen ausgebildet.

Die Durchführungsöffnung ist gemäss dieser Weiterbildung insbesondere in der Einfassungswand eingelassen.

Ferner bildet der zweite Aufnahmeraum gemäss dieser Weiterbildung insbesondere einen, von der Trennwand ausgebildeten und um die zentrale Vertiefung umlaufenden und gegenüber der zentralen Vertiefung erhöht angeordneten Aufnahmeboden aus. Der Aufnahmeboden ist umlaufend geschlossen ausgebildet und ist z. B. ringförmig.

Der Boden der Vertiefung bildet hierbei ein unteres Niveau, insbesondere eine untere Ebene, und der Aufnahmeboden ein gegenüber dem unteren Niveau oberes Niveau, insbesondere eine obere Ebene, aus.

Der zweite Aufnahmeraum bildet insbesondere eine so genannte Spleisskammer aus. Im zweiten Aufnahmeraum ist insbesondere eine Spleissschutzhalterung zur Halterung der Spleissungen angeordnet. Die Halterung ist insbesondere klemmend.

Die Spleissschutzhalterung nimmt die Spleissung zwischen einem Ende eines von aussen zugeführten Lichtwellenleiters, insbesondere einer einzelnen Faser, und einem Ende eines sogenannten "Pigtails" auf. Die Spleissschutzhalterung ist insbesondere auf dem Aufnahmeboden angeordnet. Ferner ist die Spleissschutzhalterung insbesondere an einer der Seitenwände angeordnet.

Als "Pigtail" wird ein kurzes Stück Lichtwellenleiter, in der Regel in Form einer einzelnen Faser, bezeichnet, welcher einseitig mit einem Kupplungselement, insbesondere einem LWL-(Lichtwellenleiter)-Stecker, vorkonfektioniert ist. LWL-Steckverbinder sind spezielle Steckverbinder zur lösbaren Verbindung von Lichtwellenleitern. Die entsprechend konfektionierten Lichtwellenleiter werden über das Kupplungselement miteinander oder mit anderen Komponenten lösbar verbunden.

Die zweite Seitenwand enthält insbesondere einen Seitenwandabschnitt, welcher zur ersten Seitenwand hin geneigt ist und so eine Gehäuseverjüngung von der Frontwand in Richtung einer der Frontwand gegenüber liegenden Rückseite, insbesondere Rückwand bewirkt. Die Frontwand schliesst mit dem geneigten Seitenwandabschnitt insbesondere einen Winkel von kleiner 90° (Winkelgrade) ein. Die Anschlussdose lässt sich so mit einem gewissen Neigungswinkel des Front-Panels gegenüber einer Vertikalen in eine im Boden eingelassene Anschlusseinrichtung montieren.

Der erste und zweite Aufnahmeraum bilden jeweils eine der Trennwand gegenüberliegende Arbeitsöffnung aus. Die Arbeitsöffnung wird insbesondere durch die Seitenwände, die Frontwand und gegebenenfalls durch die Rückwand seitlich begrenzt. Die Arbeitsöffnung ist insbesondere grossflächig ausgebildet, so dass der jeweilige Aufnahmeraum von aussen leicht zugänglich ist.

Die Anschlussdose beinhaltet insbesondere eine Abdeckung zum Abdecken der Arbeitsöffnung des zweiten Aufnahmeraumes. Dadurch können die im zweiten Aufnahmeraum angeordneten Lichtwellenleiterfasern samt der darin enthaltenen Montageelemente, wie Spleissschutzhalterungen oder Steckanschlüsse, vor äusseren mechanischen Einflüssen geschützt werden. Dies ist insbesondere beim Einbringen der Anschlussdose in eine Vertiefung in der Wand bzw. im Boden von Bedeutung.

Die Anschlussdose kann ebenfalls eine Abdeckung zum Abdecken der Arbeitsöffnung des ersten Aufnahmeraumes enthalten. Diese ist jedoch von untergeordneter Bedeutung, da der erste Aufnahmeraum primär eine Lichtwellenleiterkabel-Reserve aufnimmt, welche weniger empfindlich gegenüber mechanischer Beanspruchung oder äusseren Einflüssen ist, als die einzelnen Fasern des entmantelten Lichtwellenleiterkabels, wie sie im zweiten Aufnahmeraum vorliegen.

Der zweite Aufnahmeraum kann seitlich über die zentrale Vertiefung ragende Rückhalteelemente aufweisen. Die Rückhalteelemente sind insbesondere vom umlaufenden Aufnahmeboden oder von der Einfassungswand ausgehend über die zentrale Vertiefung und in Abstand zu deren Boden geführt.

Im weiteren kann der zweite Aufnahmeraum einen in der zentralen Vertiefung angeordneten Rückhalteanker aufweisen, mit jeweils einem am Boden der Vertiefung angebrachten Träger mit seitlich von diesem und im Abstand zum Boden abstehenden Rückhaltezungen.

Der zweite Aufnahmeraum kann im Weiteren insbesondere seitlich über den Aufnahmeraum bzw. den umlaufenden Aufnahmeboden und in Abstand zu diesem ragende Rückhalteelemente aufweisen. Die Rückhalteelemente sind insbesondere von den Seitenwänden, der Rückwand und/oder der Frontwand ausgehend über den Aufnahmeraum geführt. So ist insbesondere ein Rückhalteelement im Bereich der Frontwand vorgesehen, welches dafür sorgt, dass die Windungen der Lichtwellenleiter-Reserve, insbesondere der Lichtwellenleiterfaser-Reserve, im Luftraum zwischen Aufnahmeboden und Aufnahme durchgeführt wird.

Der erste Aufnahmeraum bildet insbesondere eine um den Umwindekörper umlaufende, kanalartige Vertiefung für eine Lichtwellenleiter-Reserve, insbesondere für eine Lichtwellenleiterkabel-Reserve, aus. Die kanalartige Vertiefung ist insbesondere umlaufend geschlossen, insbesondere ringförmig. Die Lichtwellenleiter-Reserve wird z. B. in Windungen, welche den Umwindekörper umlaufen, in der kanalartigen Vertiefung abgelegt. Die kanalartige Vertiefung wird z. B. zwischen der Einfassungswand und der Gehäusewand ausgebildet.

Im Weiteren bildet der Umwindekörper im ersten Aufnahmeraum insbesondere eine gegenüber der kanalartigen Vertiefung erhöht angeordnete Auflagefläche, ebenfalls für eine Lichtwellenleiterreserve, insbesondere für eine Lichtwellenleiterkabel-Reserve, aus.

Der Boden der kanalartigen Vertiefung bildet hierbei ein unteres Niveau, insbesondere eine untere Ebene, und die Auflagefläche ein gegenüber dem unteren Niveau oberes Niveau, insbesondere eine obere Ebene, aus.

Die Auflagefläche ist insbesondere für die Endmontage der Anschlussdose von Bedeutung. So wird vor dem Einbringen der Anschlussdose in eine Einbauöffnung der letzte Abschnitt der Lichtwellenleiterkabel-Reserve in einer Teilwindung, einer ganzen Windung oder in mehreren Windungen auf der Auflagefläche abgelegt. Der Radius der letzten Teilwindung oder Windung bzw. die Radien der letzten Windungen werden beim Einführen der Anschlussdose in die Einbauöffnung durch das Hereinstossen eines letzten Lichtwellenleiterkabel-Abschnittes durch die Einführöffnung vergrössert, bis diese letzten Windungen beispielweise den Seitenwänden anliegen.

Der erste Aufnahmeraum enthält insbesondere seitlich über die kanalartige Vertiefung und in Abstand zum Kanalboden ragende Rückhalteelemente. Die Rückhalteelemente sind insbesondere vom Umwindekörper bzw. von seiner Einfassungswand ausgehend über die kanalartige Vertiefung geführt. Die Rückhalteelemente können jedoch auch von den Seitenwänden der Rückwand und/oder der Frontwand aus über die kanalartige Vertiefung geführt sein.

Ferner kann der erste Aufnahmeraum seitlich über den Aufnahmeraum bzw. über die Auflagefläche und in Abstand zu dieser ragende Rückhalteelemente enthalten. Die Rückhalteelemente ragen insbesondere ausgehend von den Seitenwänden, der Rückwand und/oder der Frontwand über den Aufnahmeraum bzw. über die Auflagefläche.

Die Rückhalteelemente im ersten und zweiten Aufnahmeraum können z. B. als Nasen, Zungen oder Stifte ausgebildet sein. Die Rückhalteelemente sind insbesondere parallel oder im wesentlichen parallel zur Ebene der einzulegenden Lichtwellenleiter-Windungen ausgebildet. Das heisst, die Rückhalteelemente sind insbesondere parallel zum Kanalboden, zum Auflageboden, zur Auflagefläche bzw. zum Boden der zentralen Vertiefung ausgerichtet.

Die Aufnahmeräume, insbesondere die Auflagefläche, die kanalartige Vertiefung, die zentrale Vertiefung sowie der Aufnahmeboden sind insbesondere so ausgelegt, dass die Ebene der einzubringenden Lichtwellenleiter-Windungen parallel zur Einschubrichtung der Anschlussdose in die Aufnahme in der Wand oder im Boden liegt.

Entsprechend sind der Kanalboden, der Boden der zentralen Vertiefung sowie der Aufnahmeboden und die Auflagefläche insbesondere ebenfalls parallel zur genannten Einschubrichtung angeordnet.

Die erfindungsgemässe Anschlussdose ist insbesondere eine Bodendose, insbesondere zur Montage in einer Aufnahme im Boden oder in einer Aufnahme in einer im Boden eingelassenen Anschlusseinrichtung.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:

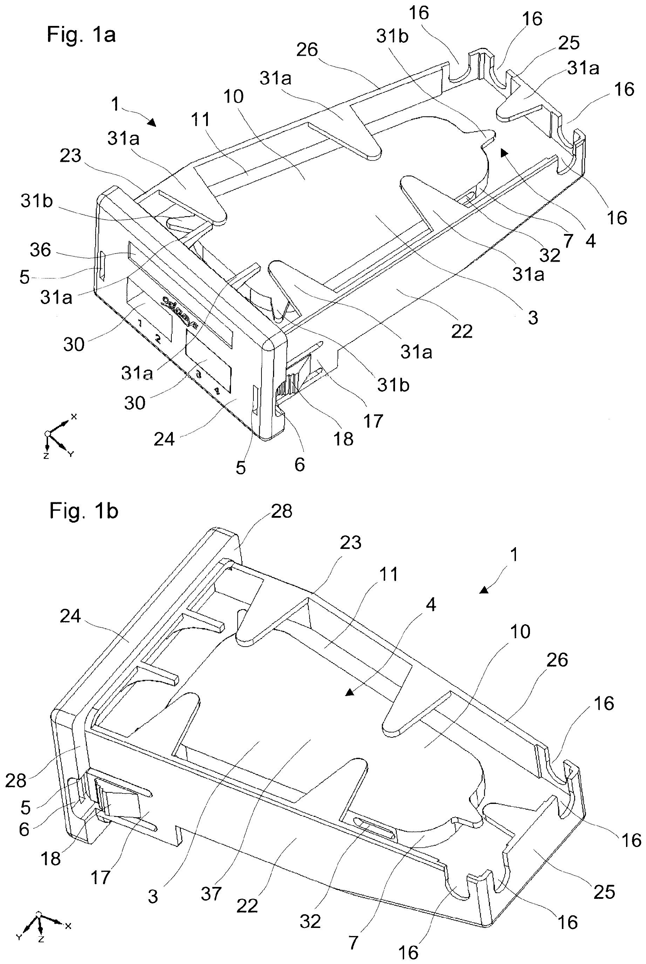

- Figur 1a-e:: eine erfindungsgemässe Anschlussdose aus unterschiedlichen perspektivischen Ansichten.

Grundsätzlich sind in den Figuren gleiche Teile mit gleichen Bezugszeichen versehen.

Die Anschlussdose 1 nach Figur 1a bis 1e enthält einen Gehäusekörper 2, welcher einen Gehäuseinnenraum ausbildet. Der Gehäuseinnenraum wird durch eine erste und zweite, einander gegenüberliegende Seitenwände 22, 23 sowie einer in einem Winkel an die Seitenwände 22, 23 angrenzende Frontwand 24 und eine dieser gegenüberliegende Rückwand 25 begrenzt. Die Frontwand 24 überkragt die beiden Seitenwände seitlich. Die Überkragung dient als Einschubbegrenzung. Die Frontwand 24 liegt in Form eines Front-Panels vor.

Unmittelbar hinter der Frontwand 24 ist an beiden Seitenwänden 22, 23 ein Schnapphaken mit einer als federelastisch ausgebildeten Lasche 17 angeordnet, an deren zur Frontwand 24 weisenden Ende eine Rastnase 18 angeordnet ist. Die Lasche 17 mündet mit ihrem anderen Ende in der jeweiligen Seitenwand 22, 23. Der Schnapphaken rastet in der Endposition, d.h. der Montageposition der Anschlussdose 1 in ein Gegenelement in der Aufnahme ein und sichert die Anschlussdose 1 in ihrer Endposition.

Die Schnappverbindung kann durch Wegdrücken des Schnapphakens aus der Rastposition gelöst werden. Hierzu sind beidseits in den seitlichen Auskragungen 28 der Frontwand 24 auf der Höhe des Schnapphakens Durchgangsöffnungen 5 vorgesehen, durch welche ein Werkzeug zum Lösen der Schnappverbindung führbar ist.

Im Weiteren weist die Auskragung 28 der Frontwand 24 auf der Höhe des Schnapphakens seitliche Ausnehmungen 6 auf. Auch diese Ausnehmungen 6 dienen zum seitlichen Einführen eines Werkzeuges zum Lösen der Schnappverbindung.

Die Schnappverbindung ist mit oder ohne Werkzeug wieder lösbar.

Die zweite Seitenwand 23 enthält einen Seitenwandabschnitt 26, welcher zur ersten Seitenwand 22 hin geneigt ist und so eine Gehäuseverjüngung von der Frontwand 24 in Richtung der Rückwand 25 ausbildet. Diese einseitige Gehäuseverjüngung ist eine Designanpassung an die Anschlussdosenaufnahme in eine Boden- Anschlusseinrichtung, in welche die Anschlussdose 1 eingeschoben wird.

Der Gehäuseinnenraum ist über eine parallel zur Einschubrichtung E verlaufende Trennwand 3 in einen ersten und zweiten Aufnahmeraum 4, 9 unterteilt. Die beiden Aufnahmeräume 4, 9 dienen unter anderem zur Aufnahme von Windungen einer Lichtwellenleiterkabel-Reserve bzw. Lichtwellenleiterfaser-Reserve (nicht gezeigt).

Der erste und zweite Aufnahmeraum 4, 9 bilden jeweils eine der Trennwand 3 gegenüberliegende Arbeitsöffnung aus. Die Arbeitsöffnung wird durch die Seitenwände 22, 23, die Frontwand 24 und gegebenenfalls durch die Rückwand 25 seitlich begrenzt. Die Arbeitsöffnung ist grossflächig ausgebildet, so dass der jeweilige Aufnahmeraum 4, 9 von aussen leicht zugänglich ist.

Die Anschlussdose 1 enthält ferner eine Kabeleinführöffnung 16 in den Seitenwänden 22, 23 und der Rückwand 25 zum Einführen eines Lichtwellenleiters in den ersten Aufnahmeraum 4. Ferner enthält die Anschlussdose 1 eine Kabeldurchführungsöffnung 32 zwischen dem ersten und zweiten Aufnahmeraum 4, 9 zum Durchführen des Kabels bzw. des Lichtwellenleiters vom ersten in den zweiten Aufnahmeraum 4, 9. Die Kabeldurchführungsöffnung 32 ist in der nachfolgend beschriebenen Einfassungswand 7 eingelassen.

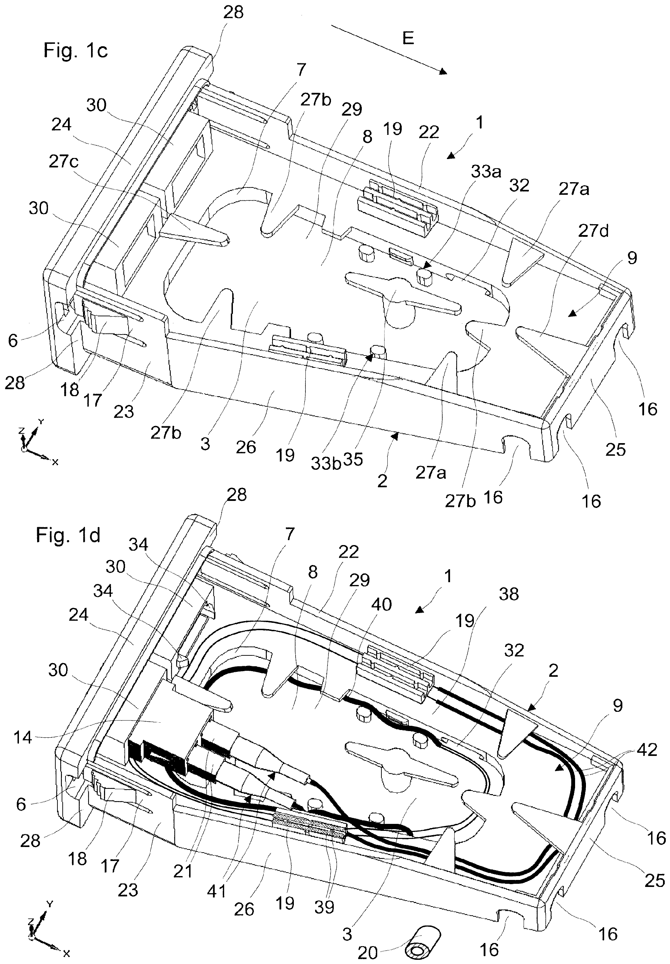

Im Weiteren enthält die Anschlussdose 1 zwei im zweiten Aufnahmeraum 9 nebeneinander in der Frontwand 24 angeordnete Aufnahmen 30 für einen Kupplungseinsatz 14, welcher zur Aufnahme des Lichtwellenleitersteckers 21 eines Pigtails 41 oder eines Blinddeckels dient. Die Aufnahme 30 ist als Durchgangsöffnung in der Frontwand 24 ausgebildet. Gemäss Figur 1d ist in einer ersten Aufnahme 30 ein Lichtwellenleiterstecker 21 eines Pigtails 41 eingeführt. Die zweite, unbenutzte Aufnahme 30 ist mit einem Blinddeckel abgedeckt, welcher über Schnapphaken 34 formschlüssig mit der Aufnahme 30 verbunden ist (siehe Figur 1d).

Zwischen der Aufnahme 30 und dem Aufnahmeboden 38 wird ein Luftraum ausgebildet, in welchem die Windungen der Lichtwellenleiter-Reserve, insbesondere der Lichtwellenleiterfaser-Reserve entlang der Frontwand 28 durchgeführt werden können.

Die Frontwand enthält im Weiteren eine Aufnahme 36, z. B. in Form eines Fensters, zum Anbringen einer Beschriftung für die Anschlussdose 1.

Die Trennwand 3 ist in einem zentralen Bereich des Gehäuseinnenraums zum ersten Aufnahmeraum 4 hin zurückversetzt. Dadurch wird im zweiten Aufnahmeraum 9 eine von einer Einfassungswand 7 eingefasste zentrale Vertiefung 29 mit einem Boden 8 ausgebildet (siehe Figur 1c und 1d). Diese dient der Aufnahme einer Lichtwellenleiter-Reserve, insbesondere einer Lichtwellenleiterkabel-Reserve in Form von Windungen sowie einer Zugentlastungseinrichtung 33a, 33b.

Ferner wird im ersten Aufnahmeraum 4 durch die zurückversetzte Trennwand 3 ein von der Umfassungs- bzw. Einfassungswand 7 begrenzter Umwindekörper 10 ausgebildet. Zwischen dem Umwindekörper 10 und den Seitenwänden 22, 23, der Frontwand 25, und der Rückwand 25 wird ein umlaufender Kabelaufnahmekanal 11 zur Aufnahme einer Lichtwellenleiterkabel-Reserve in Form von Windungen ausgebildet.

Ferner bildet der Umwindekörper 10 eine gegenüber dem Kabelaufnahmekanal 11 erhöht angeordnete, und von der Trennwand 3 ausgebildete Auflagefläche 37 auf. Diese dient ebenfalls zur Aufnahme einer Lichtwellenleiterkabel-Reserve.

Der Kanalboden bildet, durch die Arbeitsöffnung betrachtet, eine erste tiefer liegende Aufnahmeebene und die Auflagefläche 37 eine zweite, erhöhte Aufnahmeebene aus.

Der erste Aufnahmeraum 4 enthält weiters seitlich über den Kabelaufnahmekanal 11 hinaus ragende Rückhalteelemente 31b. Die Rückhalteelemente 31b sind vom Umwindekörper 10 bzw. von seiner Einfassungswand 7 ausgehend über den Kabelaufnahmekanal 11 geführt.

Ferner enthält der erste Aufnahmeraum 4 seitlich über den Aufnahmeraum 4 bzw. die Auflagefläche 37 ragende Rückhalteelemente 31a. Die Rückhalteelemente 31a ragen ausgehend von den Seitenwänden 22, 23, der Rückwand 25 und der Frontwand 24 über den Aufnahmeraum 9 bzw. die Auflagefläche 37 und im Abstand zu dieser.

Der zweite Aufnahmeraum 9 enthält einen von der Trennwand 3 ausgebildeten und um die zentrale Vertiefung 29 bzw. den Boden 8 umlaufenden und gegenüber der zentralen Vertiefung 29 erhöht angeordneten, geschlossen umlaufend ausgebildeten Aufnahmeboden 38 (siehe Figur 1c und 1d).

Der Boden 8 der Vertiefung bildet, durch die Arbeitsöffnung betrachtet, eine erste tiefer liegende Aufnahmeebene und der Aufnahmeboden 38 eine zweite, erhöhte Aufnahmeebene aus.

Der zweite Aufnahmeraum 9 weist seitlich über die zentrale Vertiefung 29 ragende nasen- bzw. zungenförmige Rückhalteelemente 27b auf. Die Rückhalteelemente 27b sind vom umlaufenden Aufnahmeboden 38 bzw. von der Einfassungswand 7 ausgehend über die zentrale Vertiefung 29 geführt.

Der zweite Aufnahmeraum 9 weist ferner seitlich über den Aufnahmeraum 9 bzw. den umlaufenden Aufnahmeboden 38 ragende Rückhalteelemente 27a auf. Die Rückhalteelemente 27a ragen ausgehend von den Seitenwänden 22, 23, der Rückwand 25 und der Frontwand 25 über den Aufnahmeraum 9.

Im zweiten Aufnahmeraum 9 sind auch zwei Spleissschutzhalterung 19 angeordnet, welche jeweils die Spleissung zwischen einem ersten Ende einer Lichtwellenleiter-Faser eines von aussen zugeführten Lichtwellenleiterkabels 40 und einem zweiten Ende einer Lichtwellenleiter-Faser eines Lichtwellenleiterabschnittes 42 eines vorkonfektionierten Pigtails 41 mit einem Lichtwellenleiterstecker 21 (LWL-(Lichtwellenleiter)-Stecker) aufnimmt. Der Lichtwellenleiterstecker 21 ist in den in der Frontwand 21 eingelassenen Kupplungseinsatz 14 eingeführt (siehe Figur 1d).

Da die Anschlussdose 1 zwei Kupplungseinsätze 14 für jeweils zwei Lichtwellenleiterfaser-Anschlüsse aufweist, sind entsprechend zwei Spleissschutzhalterungen 19 zur Halterung von jeweils zwei Spleissungen vorgesehen. Die Spleissschutzhalterungen 19 sind über dem Aufnahmeboden 38 einander gegenüber liegend an jeweils einer der Seitenwände 22, 23 angeordnet.

Zwischen dem Aufnahmeboden 38 und der Spleissschutzhalterungen 19 wird ein Luftraum ausgebildet, in welchem die Windungen der Lichtwellenleiter-Reserve, insbesondere der Lichtwellenleiterfaser-Reserve entlang der Seitenwand durchgeführt werden können.

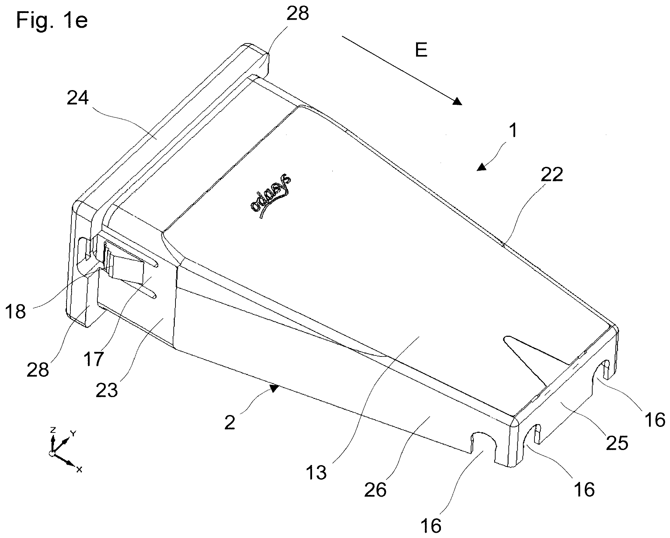

Die Anschlussdose 1 umfasst ferner eine Abdeckung 13 zum Abdecken der Arbeitsöffnung des zweiten Aufnahmeraumes 9. Dadurch wird der im zweiten Aufnahmeraum 9 angeordnete Lichtwellenleiter samt Montageelemente und Spleissung vor äusseren mechanischen Einflüssen geschützt (siehe Figur 1e).

Das Front-Panel weist beispielsweise eine Abmessung von 37 x 62 mm auf. Die Einbautiefe kann z. B. 110 mm betragen.

Zur Montage der Anschlussdose 1 in einer Aufnahme oder Einbauöffnung in der Wand oder im Boden, insbesondere in einer Aufnahme oder Einbauöffnung einer Anschlusseinrichtung im Boden, wird das anzuschliessende Lichtwellenleiterkabel durch die Einführöffnung 16 in den ersten Aufnahmeraum 4 der Anschlussdose 1 eingeführt. Bei diesem Montageschritt ist die Anschlussdose 1 ausserhalb der Aufnahme bzw. Einbauöffnung angeordnet. Entsprechend muss eine Überlänge an Lichtwellenleiterkabel zur Verfügung gestellt werden. Diese Überlänge kann z. B. bis 2 m betragen.

Das Lichtwellenleiterkabel wird weiter durch die Kabeldurchführungsöffnung 32 in den zweiten Aufnahmeraum 9 geführt. In der zentralen Vertiefung 29 neben der Kabeldurchführungsöffnung 32 ist eine erste Zugentlastungseinrichtung 33a mit Zugentlastungselementen angeordnet, welche unter anderem im Zusammenwirken mit der Einfassungswand 7 eine Zugentlastung zwischen der Lichtwellenleiter-Reserve im ersten Aufnahmeraum 4 und der Lichtwellenleiter-Reserve im zweiten Aufnahmeraum 9 bewirken. Die Zugentlastungselemente, hier in Form von Stiften, bilden eine Klemmung für das Lichtwellenleiterkabel aus.

Das Lichtwellenleiterkabel wird nun beim Einführen in die Anschlussdose 1 mittels einer ersten und zweiten Zugentlastungseinrichtung 33a, 33b klemmend gesichert. Im vorliegenden Ausführungsbeispiel weist die Anschlussdose 1 in der zentralen Vertiefung 29 zwei, einander gegenüber liegende Zugentlastungseinrichtungen 33a, 33b auf. Das Lichtwellenleiterkabel wird nun bei Austritt aus der Durchführungsöffnung 32 durch eine erste Zugentlastungseinrichtung 33a geführt und als Teilschlaufe in der zentralen Vertiefung 29 zur zweiten Zugentlastungseinrichtung 33b geführt und durch diese geführt.

Die Rückhalteelemente 27b sowie ein in der zentralen Vertiefung 29 angeordneter Rückhalteanker 35 sorgen dafür, dass der Lichtwellenleiter nicht aus der zentralen Vertiefung 29 in Richtung Arbeitsöffnung austreten kann, sondern in dieser zurückgehalten wird.

Ein Endabschnitt des Lichtwellenleiterkabels wird vor oder nach der Durchführung durch die Zugentlastungseinrichtung 33a, 33b wenigstens teilweise entmantelt, so dass die einzelnen Fasern oder die einzelne Faser des Lichtwellenleiterkabels für die Spleissung freigelegt sind bzw. ist.

Die Fasern werden anschliessend wie nachfolgend beschrieben gespleisst und so mit einem Pig-tail verbunden.

Das wenigstens teilweise entmantelte Lichtwellenleiterkabel bzw. deren Fasern werden anschliessend nach oben zum Aufnahmeboden 38 geführt.

Wenigstens teilweise entmantelt bedeutet, dass zumindest die einzelnen Lichtwellenleiterfasern eines Mehrfaserkabels freigelegt sind. Die einzelnen Fasern können jedoch immer noch einen Schutzmantel bzw. eine Schutzhülle tragen. In diesem Zustand sind die einzelnen Fasern biegsam.

Vollständig entmantelt bedeutet, dass auch die einzelne Lichtwellenleiterfaser entmantelt ist. In diesem Zustand liegt die optisch leitende Faser komplett frei und ist in der Regel nicht mehr biegsam. Damit die einzelne Faser mit der Faser eines Pigtails 41 verschweisst werden kann, muss zumindest ein Endabschnitt der Lichtwellenleiterfaser vollständig frei gelegt sein.

Das teilweise bzw. vollständig entmantelte Lichtwellenleiterkabel bzw. die einzelnen Lichtwellenleiterfasern sind besonders empfindlich auf mechanische Beschädigungen und müssen daher während der Montage der Anschlussdose 1 und im Anschluss daran besonders gut geschützt sein.

Die Anschlussdose 1 ist zur Herstellung der Spleissverbindung sowie zum Anschliessen der Lichtwellenleiterfasern an die Pigtails 41 ebenfalls ausserhalb der Montageposition positioniert.

Jeder der in einen Kupplungseinsatz 14 einzuführende Steckverbinder 21 eines Pigtails 41 umfasst einen einfaserigen Lichtwellenleiterabschnitt 42. Der Lichtwellenleiterabschnitt 42 ist an einem Endabschnitt wenigstens teilweise entmantelt. Die freigelegten Fasern der Lichtwellenleiterabschnitte 42 sowie der einzelnen Faser des zugeführten Lichtwellenleiterkabels 40 werden ausserhalb der Anschlussdose 1 mittels eines Spleissgeräts gespleisst und mit einem Spleissschutzelement 39 versehen. Das die Spleissung umgebende Spleissschutzelement 39 sorgt für einen mechanischen Schutz der Spleissung.

Die Lichtwellenleiterfasern werden mit einem speziellen Lichtbogenspleissgerät gespleisst. Hierzu werden die Fasern des zugeführten Lichtwellenleiterkabels 40 an ihren Enden mit jeweiligen Pigtails 41, d.h. mit Einzelfasern von LWL-Steckverbindern 21 verbunden. Das Spleissgerät justiert die lichtleitenden Kerne der beiden Enden der zu spleissenden Fasern punktgenau aufeinander. Das Justieren geschieht bei modernen Geräten vollautomatisch, bei älteren Modellen manuell mittels Mikrometerschrauben und Mikroskop. Anschliessend werden die Fasern mit einem Lichtbogen miteinander verschmolzen (verschweisst) und im Spleissschutzelement abgelegt.

Da diese Spleissgeräte eine gewisse Grösse aufweisen und zur Ausführung der Spleissung eine geeignete Arbeitsfläche zur Verfügung stehen muss, erfolgt die Spleissung oftmals in einiger Entfernung von der Anschlussdose 1.

Deshalb muss im Anschluss an die Zugentlastungseinrichtung 33a, 33b eine Lichtwellenleiter-Reserve zur Verfügung gestellt werden. Die Lichtwellenleiter-Reserve kann z. B. bis 50 cm betragen. Diese kann durch den zugeführten Lichtwellenleiter und/oder den Pigtail ausgebildet werden.

Das Spleissschutzelement mit der Spleissung wird im Anschluss an die Spleissung in die Spleissschutzhalterung 19 im zweiten Aufnahmeraum 9 eingeführt und in dieser klemmend gehaltert. Dies ist wichtig, da die Faser im Bereich der Spleissung nicht mehr biegsam ist und daher leicht beschädigt werden kann.

Die Überlänge des Lichtwellenleiterabschnittes zwischen der Spleissung und der Zugentlastungseinrichtung 33a, 33b wird auf dem Aufnahmeboden 38 in Form von Windungen als Lichtwellenleiter-Reserve abgelegt. Die besagte Lichtwellenleiter-Reserve kann auch teilweise in der zentralen Vertiefung 29 ebenfalls in Form von Windungen abgelegt sein.

Ferner wird die Überlänge des Lichtwellenleiterabschnittes 42 des Pigtails 41 ebenfalls auf dem Aufnahmeboden 38 in Form von Windungen als Lichtwellenleiter-Reserve abgelegt.

Die Rückhalteelemente 27a, 27c, 27d sorgen dafür, dass die auf dem Aufnahmeboden 38 abgelegten Lichtwellenleiter-Windungen nicht durch die Arbeitsöffnung nach aussen entweichen können, sondern im Aufnahmeraum 9 zurückgehalten werden.

Nach Verstauen der Überlängen im zweiten Aufnahmeraum 9 sind die Montagearbeiten im zweiten Aufnahmeraum 9 abgeschlossen und die Arbeitsöffnung des zweiten Aufnahmeraums 9 wird mit einer Abdeckung 13 verschlossen (siehe Figur 1e). Die Arbeitsöffnung des ersten Aufnahmeraumes 4 bleibt hingegen noch offen.

Die Anschlussdose 1 wird nun in eine Einbauöffnung oder Aufnahme in der Wand oder im Boden montiert. Hierbei wird die von der Zugentlastungseinrichtung 33a im zweiten Aufnahmeraum 9 zur Einbauöffnung bzw. Aufnahme hin anfallende Überlänge des Lichtwellenleiterkabels bei der Montage der Anschlussdose 1 in Form von Windungen als Kabelreserve im ersten Aufnahmeraum 4 abgelegt.

In einer ersten Montagephase werden die Windungen des Lichtwellenleiterkabels in der kanalartigen Vertiefung 11 im ersten Aufnahmeraum 4 abgelegt. In einer zweiten und abschliessenden Montagephase, in welcher die Anschlussdose 1 vollständig in die Einbauöffnung bzw. in die Aufnahme, eingeschoben wird, wird der letzte Abschnitt der Überlänge auf der Auflagefläche 37 des Umwindekörpers 10 abgelegt. Dies kann z. B. eine halbe bis dreiviertel Windung, eine ganze oder mehrere Windungen sein.

Die Ablage auf der Auflagefläche 37 erfolgt deshalb, weil beim dieser letzten Montagephase die Arbeitsöffnung des ersten Aufnahmeraums 4 nicht mehr gut zugänglich ist und die Überlänge entsprechend nicht mehr von Hand in die kanalartige Vertiefung 11 eingeschoben werden kann.

Wird nun die Anschlussdose 1 vollständig in die Einbauöffnung eingeschoben, so wird die letzte Teilwindung oder Windung bzw. werden die letzten Windungen auf der Auflagefläche 37 durch das hineingestossene Lichtwellenleiterkabel vergrössert bis diese z. B. an den Seitenwänden anstossen.

Die Rückhalteelemente 31a, 31b sorgen dafür, dass die Kabelwindungen nicht mehr aus der kanalartigen Vertiefung 11 bzw. nicht mehr von der Auflagefläche 37 durch die Arbeitsöffnung nach aussen treten können, sondern im ersten Aufnahmeraum bzw. in der kanalartigen Vertiefung 11 zurückgehalten werden.

Ferner kann ebenfalls zwecks Zugentlastung und/oder zur Abdichtung der Anschlussdose 1 das Kabel über einen Kabelführungseinsatz 20, welcher axial gesichert in der Einführöffnung 16 eingesetzt ist, in die Anschlussdose 16 eingeführt sein. Das Kabel wird hierbei durch den Kabelführungseinsatz 20 geführt.

Wie aus den oben erläuterten Montageschritten hervorgeht, finden die einzelnen Arbeitsschritte in den einzelnen Aufnahmeräumen 4, 9 auf jeweils unterschiedlichen Ebenen bzw. Niveaus statt. So findet ein erster Arbeitschritt im zweiten Aufnahmeraum 9 im Boden 8 der Vertiefung 29 im Rahmen der Zugentlastung statt. Ein nachfolgender Arbeitsschritt erfolgt auf dem Aufnahmeboden 38 bei der Fixierung des Spleissschutzes in der Spleissschutzhalterung 19 und beim Anlegen der Lichtwellenleiter-Reserve. Ein nachfolgender Arbeitsschritt findet in der kanalartigen - Vertiefung im ersten Aufnahmeraum 4 beim Anlegen der Lichtwelleleiterkabel-Reserve statt. Ein weiterer Arbeitsschritt findet überdies beim Anlegen der letzten Windungen von Lichtwellenleiterkabel auf der Auflagefläche 37 statt.

Durch die Eigenspannung des Lichtwellenleiterkabels 40 bzw. der einzelnen Lichtwellenleiterfasern werden die Windungen der Lichtwellenleiter-Ablagen jeweils unter Ausbildung eines maximal möglichen Radius gegen die angrenzenden Wände gedrückt, welche je nach Ablage den Seitenwänden, der Rückwand, der Frontwand bzw. der Umfassungswand entsprechen.

## Patentansprüche

1. Anschlussdose (1) für einen Lichtwellenleiter, enthaltend einen Gehäusekörper (2), welcher einen Gehäuseinnenraum ausbildet, wobei der Gehäuseinnenraum über eine Trennwand (3) in einen ersten und zweiten Aufnahmeraum (4, 9) unterteilt ist, und die Anschlussdose (1):
- eine Lichtwellenleiter-Einführöffnung (16) zum Einführen eines Lichtwellenleiters in den ersten Aufnahmeraum (4),
- eine Durchführungsöffnung (32) zwischen dem ersten und zweiten Aufnahmeraum (4, 9) zum Durchführen des Lichtwellenleiters vom ersten (4) in den zweiten Aufnahmeraum (9), sowie
- eine im zweiten Aufnahmeraum (9) angeordnete Aufnahme (30) für einen Kupplungseinsatz (14)
enthält,
**dadurch gekennzeichnet, dass**
die Trennwand (3) in einem zentralen Bereich des Gehäuseinnenraums zum ersten Aufnahmeraum (4) hin zurückversetzt ist und so im zweiten Aufnahmeraum (9) eine von einer Einfassungswand (7) umfasste zentrale Vertiefung (29) zur Aufnahme von Lichtwellenleiter-Windungen und im ersten Aufnahmeraum (4) eine von der Einfassungswand (7) begrenzter Umwindekörper (10) zur Aufnahme von Lichtwellenleiter-Windungen ausgebildet wird.

2. Anschlussdose gemäss Anspruch 1, **dadurch gekennzeichnet, dass** die Anschlussdose (1) eine Frontwand (24) enthält, und die Aufnahme (30) für den Kupplungseinsatz (14) in der Frontwand (24) angeordnet ist.

3. Anschlussdose gemäss einem der Ansprüche 1 bis 2, **dadurch gekennzeichnet, dass** die Durchführungsöffnung (32) in der Einfassungswand (7) eingelassen ist.

4. Anschlussdose gemäss einem der Ansprüche 1 bis 3, **dadurch gekennzeichnet, dass** der zweite Aufnahmeraum (9) einen, von der Trennwand (3) ausgebildeten und um die zentrale Vertiefung (29) umlaufenden und gegenüber der zentralen Vertiefung (29) erhöht angeordneten Aufnahmeboden (38) ausbildet.

5. Anschlussdose gemäss einem der Ansprüche 1 bis 4, **dadurch gekennzeichnet, dass** im zweiten Aufnahmeraum (9) wenigstens eine Spleissschutzhalterung (19) angeordnet ist.

6. Anschlussdose gemäss einem der Ansprüche 1 bis 5, **dadurch gekennzeichnet, dass** die Anschlussdose (1) eine erste und zweite Seitenwand (22, 23), welche einander gegenüber liegen und in einem Winkel an die Frontwand (24) anschliessen sowie über diese miteinander verbunden sind, wobei die zweite Seitenwand (23) einen Seitenwandabschnitt (26) enthält, welcher zur ersten Seitenwand (22) hin geneigt ist, und so eine Gehäuseverjüngung von der Frontwand (24) in Richtung einer der Frontwand (24) gegenüber liegenden Rückseite, insbesondere Rückwand (25) bewirkt.

7. Anschlussdose gemäss einem der Ansprüche 1 bis 3, **dadurch gekennzeichnet, dass** der erste und zweite Aufnahmeraum (9) eine der Trennwand (3) gegenüberliegende Arbeitsöffnung aufweist, welche verschliessbar sein kann.

8. Anschlussdose gemäss Anspruch 7, **dadurch gekennzeichnet, dass** die Anschlussdose (1) eine Abdeckung (13) zum Abdecken der Arbeitsöffnung des zweiten Aufnahmeraumes (9) umfasst.

9. Anschlussdose gemäss Anspruch 4, **dadurch gekennzeichnet, dass** der zweite Aufnahmeraum (9) ausgehend von der Einfassungswand (7) und/oder vom umlaufenden Aufnahmeboden (38) seitlich über die zentrale Vertiefung (29) ragende Rückhalteelemente (27b) enthält.

10. Anschlussdose gemäss Anspruch 4, **dadurch gekennzeichnet, dass** der zweite Aufnahmeraum (9) ausgehend von der Frontwand (24), den Seitenwänden (22, 23) und/oder der Rückwand (25) seitlich über den umlaufenden Aufnahmeboden (38) ragende Rückhalteelemente (27a) enthält.

11. Anschlussdose gemäss einem der Ansprüche 1 bis 3, **dadurch gekennzeichnet, dass** der erste Aufnahmeraum (4) eine um den Umwindekörper (10) umlaufende, kanalartige Vertiefung (11) für eine Lichtwellenleiter-Reserve ausbildet.

12. Anschlussdose gemäss Anspruch 11, **dadurch gekennzeichnet, dass** der Umwindekörper (10) eine gegenüber der kanalartigen Vertiefung (11) erhöht angeordnete Auflagefläche (37) für eine Lichtwellenleiter-Reserve ausbildet.

13. Anschlussdose gemäss Anspruch 11 oder 12, **dadurch gekennzeichnet, dass** der erste Aufnahmeraum (4) vom Umwindekörper (10) bzw. von der Einfassungswand (7) ausgehende und über die kanalartige Vertiefung (11) ragende Rückhalteelemente (31b) enthält.

14. Anschlussdose gemäss einem der Ansprüche 1 bis 3, **dadurch gekennzeichnet, dass** der erste Aufnahmeraum (4) von den Seitenwänden (22, 23), der Rückwand (25) und/oder der Frontwand (24) ausgehende und über den ersten Aufnahmeraum (4) ragende Rückhalteelemente (31a) enthält.

## Claims

1. A junction box (1) for a fibre optic cable, comprising a housing body (2) which forms a housing interior, wherein the housing interior is subdivided into a first and second receiving space (4, 9) via a separating wall (3), and the junction box (1) comprises:
- a fibre optic cable insertion opening (16) for inserting a fibre optic cable into the first receiving space (4),
- a feed-through opening (32) between the first and the second receiving space (4, 9) for feeding through the fibre optic cable from the first (4) into the second receiving space (9), as well as
- a receiver (30) for a coupling insert (14), said receiver being arranged in the second receiving space (9),
**characterised in that**
the separating wall (3), in a central region of the housing interior, is set back towards the first receiving space (4) and a central deepening (29) which is encompassed by an enclosure wall (7) and which is for receiving fibre optic cable windings is thus formed in the second receiving space (9) and a wind-around body (10) which is delimited by the enclosure wall (7) and is for receiving fibre optic cable windings is formed in the first receiving space (4).

2. A junction box according to claim 1, **characterised in that** the junction box (1) comprises a front wall (24), and the receiver (30) for the coupling insert (14) is arranged in the front wall (24).

3. A junction box according to one of the claims 1 to 2, **characterised in that** the feed-through opening (32) is recessed in the enclosure wall (7).

4. A junction box according to one of the claims 1 to 3, **characterised in that** the second receiving space (9) comprises a receiving base (38) which is formed by the separating wall (3), is peripheral around the central deepening (29) and is arranged in a raised manner with respect to the central deepening (29).

5. A junction box according to one of the claims 1 to 4, **characterised in that** at least one splice-protection holder (1) is arranged in the second receiving space (9)

6. A junction box according to one of the claims 1 to 5, **characterised in that** the junction box (1) comprises a first and a second side wall (22, 23) which lie opposite one another and connect onto the front wall (24) at an angle as well as are connected to one another via this, wherein the second side wall (23) comprises a side wall section (26) which is inclined towards the first side wall (22) and therefore effects a housing tapering from the front wall (24) in the direction of a rear side, in particular rear wall (25), which lies opposite to the front wall (24).

7. A junction box according to one of the claims 1 to 3, **characterised in that** the first and the second receiving space (9) comprises a working opening which lies opposite the separating wall (3) and which can be closable.

8. A junction box according to claim 7, **characterised in that** the junction box (1) comprises a covering (13) for covering the working opening of the second receiving space (9).

9. A junction box according to claim 4, **characterised in that** the second receiving space (9), departing from the enclosure wall (7) and/or from the peripheral receiving base (38), comprises retaining elements (27b) which project laterally over the central deepening (29).

10. A junction box according to claim 4, **characterised in that** the second receiving space (9), departing from the front wall (24), the side walls (22, 23) and/or the rear wall (25), comprises retaining elements (27a) which project laterally over the peripheral receiving base (38).

11. A junction box according to one of the claims 1 to 3, **characterised in that** the first receiving space (4) forms a channel-like deepening (11) for a fibre optic cable reserve, said deepening being peripheral around the wind-around body (10).

12. A junction box according to claim 11, **characterised in that** the wind-around body (10) forms a rest surface (37) for a fibre optic cable reserve, said rest surface being arranged in a raised manner with respect to the channel-like deepening (11).

13. A junction box according to claim 11 or 12, **characterised in that** the first receiving space (4) comprises retaining elements (31b) which depart from the wind-around body (10) or from the enclosure wall (7) and which project over the channel-like deepening (11).

14. A junction box according to one of the claims 1 to 3, **characterised in that** the first receiving space (4) comprises retaining elements (31a) which depart from the side walls (22, 23) the rear wall (25) and/or the front wall (24) and project over the first receiving space (4).

## Revendications

1. Boîtier de raccordement (1) pour conducteur d'ondes lumineuses, contenant un corps de boîtier (2) qui forme un espace intérieur de boîtier, l'espace intérieur de boîtier étant divisé par une cloison de séparation (3) en un premier et un deuxième espace de réception (4, 9), le boîtier de raccordement (1) contenant :
une ouverture (16) d'introduction de conducteur d'ondes lumineuses qui permet d'introduire un conducteur d'ondes lumineuses dans le premier espace de réception (4),
une ouverture de passage (32) située entre le premier et le deuxième espace de réception (4, 9) pour passer le conducteur d'ondes lumineuses du premier espace de réception (4) au deuxième espace de réception (9) et
un logement (30) disposé dans le deuxième espace de réception (9) pour recevoir une garniture d'accouplement (14),
**caractérisé en ce que**
la cloison de séparation (3) est en retrait par rapport au premier espace de réception (4) dans une partie centrale de l'espace intérieur de boîtier, de sorte que dans le deuxième espace de réception (9), un creux central (29) entouré par une paroi de bordure (7) est formé pour loger des enroulements du conducteur d'ondes lumineuses et **en ce que** dans le premier espace de réception (4), un corps d'enroulement (10) délimité par la paroi de bordure (7) est formé pour loger les enroulements du conducteur d'ondes lumineuses.

2. Boîtier de raccordement selon la revendication 1, **caractérisé en ce que** le boîtier de raccordement (1) contient une paroi frontale (24) et **en ce que** le logement (30) prévu pour la garniture d'accouplement (14) est disposé dans la paroi frontale (24).

3. Boîtier de raccordement selon l'une des revendications 1 et 2, **caractérisé en ce que** l'ouverture de passage (32) est ménagée dans la paroi de bordure (7).

4. Boîtier de raccordement selon l'une des revendications 1 à 3, **caractérisé en ce que** le deuxième espace de réception (9) forme un fond de logement (38) formé par la cloison de séparation (3) et entourant le creux central (29), et rehaussé par rapport au creux central (29).

5. Boîtier de raccordement selon l'une des revendications 1 à 4, **caractérisé en ce qu'**au moins un support (19) de protection d'épissure est disposé dans le deuxième espace de réception (9).

6. Boîtier de raccordement selon l'une des revendications 1 à 5, **caractérisé en ce que** le boîtier de raccordement (1) présente une première et une deuxième paroi latérale (22, 23) situées l'une en face de l'autre, se raccordant obliquement à la paroi frontale (24) et reliées l'une à l'autre au moyen de cette dernière, la deuxième paroi latérale (23) contenant une section (26) de paroi latérale inclinée par rapport à la première paroi latérale (22) pour ainsi former un rétrécissement du boîtier entre la paroi frontale (24) et un côté arrière, en particulier une paroi arrière (25), située face à la paroi frontale (24) .

7. Boîtier de raccordement selon l'une des revendications 1 à 3, **caractérisé en ce que** le premier et le deuxième espace de réception (9) présentent une ouverture de travail située face à la cloison de séparation (3) et apte à être refermée.

8. Boîtier de raccordement selon la revendication 7, **caractérisé en ce que** le boîtier de raccordement (1) comporte un couvercle (13) qui recouvre l'ouverture de travail du deuxième espace de réception (9).

9. Boîtier de raccordement selon la revendication 4, **caractérisé en ce que** partant de la paroi de bordure (7) et/ou du fond périphérique de logement (38), le deuxième espace de réception (9) contient des éléments de retenue (27b) qui débordent latéralement au-delà du creux central (29).

10. Boîtier de raccordement selon la revendication 4, **caractérisé en ce que** partant de la paroi frontale (24), des parois latérales (22, 23) et/ou de la paroi arrière (25), le deuxième espace de réception (9) contient des éléments de retenue (27a) qui débordent latéralement au-delà du fond périphérique de logement (38) .

11. Boîtier de raccordement selon l'une des revendications 1 à 3, **caractérisé en ce que** le premier espace de réception (4) forme pour une réserve de conducteur d'ondes lumineuses un creux (11) en forme de canal qui entoure le corps d'enroulement (10).

12. Boîtier de raccordement selon la revendication 11, **caractérisé en ce que** le corps d'enroulement (10) forme pour une réserve de conducteur d'ondes lumineuses une surface de pose (37) disposée plus haut que le creux (11) en forme de canal.

13. Boîtier de raccordement selon les revendications 11 ou 12, **caractérisé en ce que** le premier espace de réception (4) contient des éléments de retenue (31b) qui partent du corps d'enroulement (10) ou de la paroi de bordure (7) et qui débordent au-dessus du creux (11) en forme de canal.

14. Boîtier de raccordement selon l'une des revendications 1 à 3, **caractérisé en ce que** le premier espace de réception (4) contient des éléments de retenue (31a) qui partent des parois latérales (22, 23), de la paroi arrière (25) et/ou de la paroi frontale (24) et qui débordent au-delà du premier espace de réception (4).
